# EUROPÄISCHE PATENTSCHRIFT

(11) **EP 4 098 473 B1**
(45) Veröffentlichungstag und Bekanntmachung des Hinweises auf die Patenterteilung: **07.10.2026**
(21) Anmeldenummer: 22175815.4
(22) Anmeldetag: 27.05.2022
(51) Int. Cl.: B60L 13/03, H02K 41/02, B65G 54/02

(54) **TRANSPORTANLAGE UND VERFAHREN ZUM BETREIBEN EINER TRANSPORTANLAGE MIT EINER KOLLISIONSÜBERWACHUNG**
TRANSPORT INSTALLATION AND METHOD FOR OPERATING A TRANSPORT INSTALLATION WITH COLLISION MONITORING
INSTALLATION DE TRANSPORT ET PROCÉDÉ PERMETTANT DE FAIRE FONCTIONNER UNE INSTALLATION DE TRANSPORT AYANT UNE SURVEILLANCE DE COLLISIONS

(30) Priorität: 31.05.2021 AT 504352021
(43) Veröffentlichungstag der Anmeldung: 07.12.2022
(73) Patentinhaber: ABB Schweiz AG, 5400 Baden (CH)
(72) Erfinder: Karolus, Christina, 5142 Eggelsberg (AT); Reichenwallner, Benjamin, 5142 Eggelsberg (AT)
(74) Vertreter: Weiss Patentanwalts GmbH

(56) Entgegenhaltungen:
- EP-A1- 3 599 127
- EP-A2- 3 196 719
- US-A1- 2020 171 953

## Beschreibung

Die Erfindung betrifft ein Verfahren zum Betreiben einer Transportanlage in Form eines Langstatorlinearmotors mit einer Vielzahl von Transporteinheiten, wobei im Betrieb der Transportanlage mit einer vorgegebenen Kollisionslogik laufend überwacht wird, dass ein Abstand zwischen benachbarten Transporteinheiten oder zwischen einer Transporteinheit und einer Barriere ausreichend groß ist, sodass unter Berücksichtigung von vorgegebenen Kollisionsbewegungslimits und vorgegebenen Kollisionsabmessungen der Transporteinheiten oder der Transporteinheit eine Kollision der benachbarten Transporteinheiten oder der Transporteinheit und der Barriere verhinderbar ist. Die Erfindung betrifft auch eine Transportanlage in Form eines Langstatorlinearmotors mit einer Vielzahl von Transporteinheiten und mit einer Anlagensteuereinheit, die die Bewegungen der Transporteinheiten regelt, wobei eine Kollisionssteuereinheit vorgesehen ist, die im Betrieb der Transportanlage mit einer vorgegebenen Kollisionslogik laufend überwacht, dass ein Abstand zwischen benachbarten Transporteinheiten oder zwischen einer Transporteinheit und einer Barriere ausreichend groß ist, sodass unter Berücksichtigung von vorgegebenen Kollisionsbewegungslimits und vorgegebenen Kollisionsabmessungen der Transporteinheiten oder der Transporteinheit eine Kollision der benachbarten Transporteinheiten oder der Transporteinheit und der Barriere verhinderbar ist.

Bei einem Linearmotor ist ein Primärteil (Stator) vorgesehen und ein Sekundärteil (Läufer), der relativ zum Primärteil bewegbar angeordnet ist. Am Primärteil sind Magnetfelderzeugungseinheiten angeordnet und am Sekundärteil Erregungsmagnete, oder umgekehrt. Die Erregungsmagnete sind entweder als Permanentmagnete, elektrische Spulen oder Kurzschlusswicklungen ausgeführt. Die Magnetfelderzeugungseinheiten können als Antriebsspulen ausgeführt sein. Antriebsspulen sind elektrische Spulen, die zur Erzeugung eines elektromagnetischen Feldes durch Anlegen einer Spulenspannung bestromt werden. Die Magnetfelderzeugungseinheiten können aber auch als bewegte Magnete (Permanentmagnete) ausgeführt sein, um das elektromagnetische Feld zu erzeugen, beispielsweise wie in EP 3 582 376 A1 beschrieben ist. Durch das Zusammenwirken der (elektro)magnetischen Felder der Erregungsmagnete und der Magnetfelderzeugungseinheiten wirken Kräfte auf den Sekundärteil, die den Sekundärteil relativ zum Primärteil bewegen. Der Linearmotor kann beispielsweise als Synchronmaschine oder als Asynchronmaschine ausgeführt sein. Die Magnetfelderzeugungseinheiten des Linearmotors sind entweder entlang einer Bewegungsrichtung angeordnet oder in einer Bewegungsebene. Der Sekundärteil kann entlang dieser einen Bewegungsrichtung bewegt werden oder frei in der Bewegungsebene in den zwei Bewegungsrichtungen. Man kann auch zwischen Kurzstatorlinearmotoren und Langstatorlinearmotoren unterscheiden, wobei beim Langstatorlinearmotor der Sekundärteil kürzer oder kleiner als der Primärteil ist und beim Kurzstatorlinearmotor der Primärteil kürzer oder kleiner als der Sekundärteil ist.

Die Erfindung betrifft Langstatorlinearmotoren, worunter ausdrücklich lineare Langstatorlinearmotoren (mit Bewegung in einer Bewegungsrichtung), als auch planare Langstatorlinearmotoren (mit Bewegung in einer Bewegungsebene, häufig auch Planarmotor genannt) verstanden werden. Bei Langstatorlinearmotoren werden üblicherweise mehrere Sekundärteile gleichzeitig und unabhängig voneinander entlang des Primärteiles (in einer Bewegungsrichtung oder in einer Bewegungsebene) bewegt. Langstatorlinearmotoren werden daher oftmals in elektromagnetischen Transportsystemen eingesetzt, bei denen mehrere Transporteinheiten (Sekundärteile) zur Durchführung von Transportaufgaben gleichzeitig entlang eines Stators (Primärteil) bewegt werden. Die Bewegungen der Transporteinheiten können unabhängig voneinander sein.

Aus dem Stand der Technik sind Langstatorlinearmotoren bekannt. In einem Langstatorlinearmotor sind Magnetfelderzeugungseinheiten in Bewegungsrichtung hintereinander oder in einer Bewegungsebene entlang einer Stützkonstruktion angeordnet. Im Falle eines Planarmotors sind auch Anordnungen der Magnetfelderzeugungseinheiten bekannt, bei denen Magnetfelderzeugungseinheiten am Stator in mehreren Ebenen angeordnet sind, wobei die Magnetfelderzeugungseinheiten einer Eben für eine Bewegungsrichtung vorgesehen sein können. Die an der Stützkonstruktion angeordneten Magnetfelderzeugungseinheiten bilden den Stator des Langstatorlinearmotors, der sich im Bewegungsraum der Transportanlage erstreckt. An einem Läufer sind Erregungsmagnete, entweder Permanentmagnete oder Elektromagnete, angeordnet, die ein magnetisches Erregungsfeld erzeugen. Der Läufer fungiert in einer Transportanlage als Transporteinheit, beispielsweise zum Bewegen eines Gegenstandes. Werden die Antriebsspulen im Bereich eines Läufers bestromt, so wird ein elektromagnetisches Antriebsmagnetfeld erzeugt, das mit dem Erregungsfeld der Erregungsmagnete zur Erzeugung einer Antriebskraft auf den Läufer zusammenwirkt. Gleiches kann mit den bewegten Magneten als Magnetfelderzeugungseinheiten bewirkt werden, mit denen das Antriebsmagnetfeld erzeugt wird. Durch Steuern der Bestromung der Antriebsspulen oder der Bewegung der Magnete kann ein bewegtes Antriebsmagnetfeld erzeugt werden, womit der Läufer in Bewegungsrichtung oder in der Bewegungsebene des Langstatorlinearmotors bewegbar ist. Der Vorteil ist, dass gleichzeitig eine Vielzahl von Läufern unabhängig voneinander auf dem Stator bewegt werden können, wobei die Bewegungen der Läufer entlang des Stators von einer Steuerung einzeln und unabhängig voneinander gesteuert werden können. Hierzu können die Magnetfelderzeugungseinheiten einzeln angesteuert werden, oder auch in Gruppen.

Aufgrund des Umstandes, dass die Läufer einzeln und unabhängig voneinander am Stator bewegt werden können, ist es bereits bekannt, eine Kollisionsvermeidung vorzusehen. Die Kollisionsvermeidung dient dazu, eine unerwünschte Kollision zwischen zwei Läufer, deren Bewegungspfade sich überschneiden, oder zwischen einem Läufer und einem anderen Teil der Transportanlage, wie beispielsweise ein Teil einer an der Transportanlage vorgesehenen Bearbeitungsstation, zu verhindern. Überschneidende Bewegungspfade können sich bei einem linearen Langstatorlinearmotor ergeben, wenn sich zwei Läufer hintereinander in dieselbe Richtung bewegen oder wenn zwei Läufer aufeinander zufahren. Eine solche Kollisionsvermeidung geht beispielsweise aus der EP 3 202 612 A1 hervor. Bei dieser Kollisionsvermeidung wird laufend geprüft, ob eine Transporteinheit ein Stillstandsmanöver mit vorgegebener Kinematik ausführen kann, ohne Gefahr zu laufen, mit einer vorausfahrenden Transporteinheit oder mit einer ortsfesten Barriere zu kollidieren. Es kann dabei auch geprüft werden, ob man durch ein Angleichsmanöver die Bewegung eines Läufers so verändern kann, um ein Stillstandsmanöver zu vermeiden.

Auch die EP 3 196 719 A2 beschreibt eine Kollisionsvermeidung bei einem Langstatorlinearmotor. Hier wird für jeden Läufer eine minimale Kollisionsvermeidungsdistanz festgelegt und sichergestellt, dass kein anderer Läufer in diese Kollisionsvermeidungsdistanz eintritt. Ähnliches geht auch aus der EP 3 599 127 A1 und der US 2020/017953 A1 hervor.

Die bekannten Kollisionsvermeidungsstrategien nutzen die Ausdehnungen der Läufer in Bewegungsrichtung und Kenntnis über die aktuellen Bewegungszustände (insbesondere Position, Geschwindigkeit, Beschleunigung) der Läufer, um mögliche Kollisionen mit anderen Läufern im Umfeld zu erkennen und um gegebenenfalls in die Bewegungen einzugreifen, um Kollisionen zu vermeiden. Hierzu ist auch die Kenntnis möglicher Bewegungslimits der Läufer erforderlich, also beispielswiese ein Beschleunigungslimit (im Sinne einer Verzögerung und/oder Beschleunigung) oder ein Geschwindigkeitslimit, da diese Bewegungslimits natürlich die möglichen Eingriffe in die Bewegungen der Läufer beschränken und damit auch die Möglichkeiten auf potentielle Kollisionen zu reagieren. Eine maximal mögliche Verzögerung beeinflusst beispielsweise maßgeblich den möglichen Bremsweg eines Läufers. Solche Bewegungslimits sind in der Steuerung des Langstatorlinearmotors, oder in einer Kollisionsvermeidung der Steuerung, konfiguriert und damit bekannt.

Bei Betrieb einer Transportanlage in Form eines Langstatorlinearmotors kann es aber vorkommen, dass man die Bewegungslimits ändern möchte. Beispielsweise kann es erwünscht sein, die Abstände zwischen hintereinanderfahrenden Läufern bei gleicher Geschwindigkeit zu verringern, um eine höhere Transportleistung zu erzielen. Hierbei kann eine Anpassung der Beschleunigungslimits erforderlich sein, damit die Kollisionsvermeidung auf die kürzeren Abstände reagieren kann und gegebenenfalls Kollisionen vermeiden kann.

Es kann auch der Fall eintreten, dass ein Läufer sanfter bremsen muss als bisher, beispielsweise weil es zu einer Änderung in der Produktionsanlage, in der die Transportanlage integriert ist, oder zu einer Änderung des transportierten Produktes kam. Es kann auch zu einem Stopp der Transportanlage kommen, wobei oftmals mit anderen Bewegungslimits gestoppt werden soll, als im normalen Betrieb vorgegeben sind. Daneben kann es natürlich eine Fülle anderer Gründe geben, um in einer Transportanlage in Form eines Langstatorlinearmotors ein Bewegungslimit eines Läufers zu ändern.

Ebenso können sich im Betrieb der Transportanlage die Abmessungen eines Läufers, insbesondere die Ausdehnung in Bewegungsrichtung aber auch quer dazu, verändern. Das kann beispielsweise beim Be- oder Entladen des Läufers mit einem zu transportierenden Produkt passieren. Wenn die Abmessungen an den Beladungszustand angepasst werden, dann können die Abstände zwischen den Läufern minimal gehalten werden, wodurch die Transportleistung der Transportanlage erhöht werden kann oder die Auslastung einer Bearbeitungsstation erhöht werden kann. Daneben kann es natürlich eine Fülle anderer Gründe geben, um in einer Transportanlage eine Abmessung eines Läufers zu ändern.

Solche Änderungen während des Betriebs sind aber problematisch, weil das dazu führen kann, dass die Kollisionsvermeidung nach der Änderung eine Gefahr einer Kollision erkennt und in die Bewegung der Läufer eingreift. Im schlimmsten Fall kann die Kollisionsvermeidung auch eine Fehlerreaktion oder einen Notstopp eines oder mehrere Läufer auslösen, was im Betrieb der Transportanlage zu vermeiden ist. Ein solcher Notstopp kann sich beispielsweise einfach in der gesamten Transportanlage fortpflanzen und zum Stillstand der gesamten Transportanlage führen.

Es ist daher eine Aufgabe der gegenständlichen Erfindung, in einer Transportanlage in Form eines Langstatorlinearmotors während des Betriebs der Transportanlage eine sichere Änderung eines Bewegungslimits oder einer Abmessung eines Läufers zu ermöglichen.

Diese Aufgabe wird dadurch gelöst, dass, wenn während des Betriebs der Transportanlage für eine erste Transporteinheit ein neues Bewegungslimit oder eine neue Abmessung vorgegeben wird, vor der Verwendung des neuen Bewegungslimits als Kollisionsbewegungslimit oder der neuen Abmessung als Kollisionsabmessung in der Kollisionslogik überprüft wird, ob das neue Bewegungslimit oder die neue Abmessung aufgrund der vorgegebenen Kollisionslogik zu einem Kollisionsrisiko mit einer anderen, benachbarten Transporteinheit oder einer Barriere der Transportanlage führt, und das neue Bewegungslimit in der Kollisionslogik als Kollisionsbewegungslimit für die erste Transporteinheit verwendet wird oder die neue Abmessung in der Kollisionslogik als Kollisionsabmessung der ersten Transporteinheit verwendet wird, wenn kein Kollisionsrisiko erkannt wird. Damit wird verhindert, dass es durch eine Änderung der Kollisionsabmessung oder des Kollisionsbewegungslimits zu einem unvorhergesehenen Zustand an der Transportanlage kommt, die eine unerwünschte Reaktion der Kollisionsüberwachung auslöst. Die Übernahme der geänderten Kollisionsabmessung oder des geänderten Kollisionsbewegungslimits erfolgt erst dann, wenn kein Kollisionsrisiko erkannt wird.

Wenn die Überprüfung des Kollisionsrisikos in vorgegebenen Zeitabständen wiederholt wird, wenn für die benachbarten Transporteinheiten ein Kollisionsrisiko erkannt wird, kann erreicht werden, dass die Übernahme erfolgt, sobald das Kollisionsrisiko wegfällt.

Es ist auch vorteilhaft, im Falle eines erkannten Kollisionsrisikos zuerst die Bewegung der ersten und/oder der anderen Transporteinheit zu verändern, sodass bei Verwendung des neuen Bewegungslimits als Kollisionsbewegungslimit für die erste Transporteinheit oder bei Verwendung der neuen Abmessung als Kollisionsabmessung für die erste Transporteinheit das Kollisionsrisiko wegfällt und erst dann das neue Bewegungslimit in der Kollisionslogik als Kollisionsbewegungslimit für die erste Transporteinheit verwendet wird oder die neue Abmessung in der Kollisionslogik als Kollisionsabmessung der ersten Transporteinheit verwendet wird. Das ermöglicht bedarfsweise einen aktiven Eingriff in die Bewegungen vor der Übernahme der geänderten Kollisionsabmessung oder des geänderten Kollisionsbewegungslimits, um die Übernahme so rasch wie möglich machen zu können.

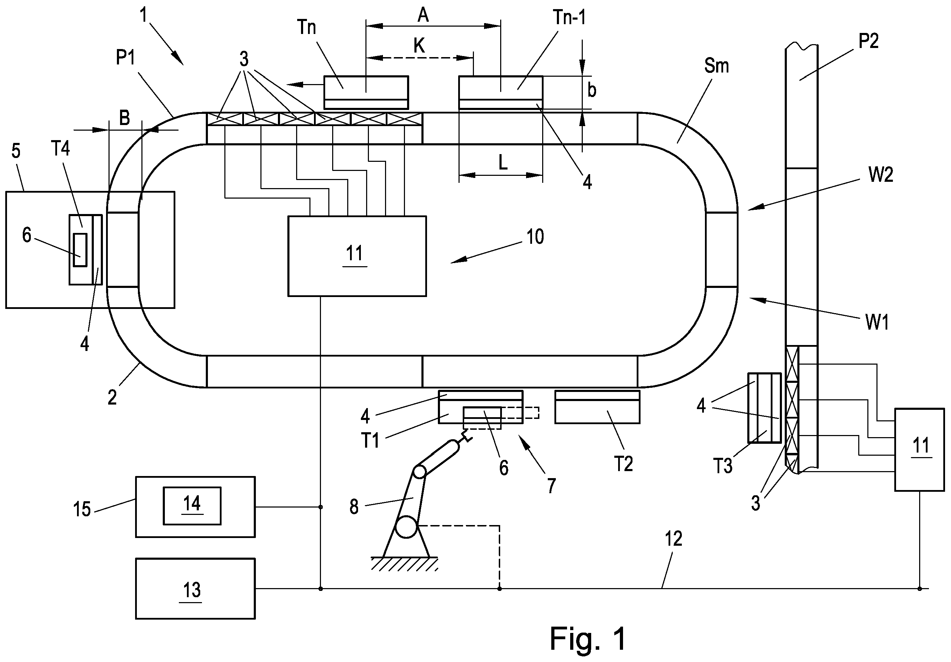

Die gegenständliche Erfindung wird nachfolgend unter Bezugnahme auf die Figur 1 näher erläutert, die beispielhaft, schematisch und nicht einschränkend vorteilhafte Ausgestaltungen der Erfindung zeigen. Dabei zeigt
Fig.1 eine mögliche Ausgestaltung einer Transportanlage in Form eines linearen Langstatorlinearmotors.

Der Aufbau und die Funktion eines Langstatorlinearmotors sind an sich hinlänglich bekannt, weshalb im Folgenden mit Bezugnahme auf die Fig.1 nur kurz und nur soweit für das Verständnis der Erfindung erforderlich eingegangen wird. Obwohl die Erfindung mit Bezugnahme auf einen linearen Langstatorlinearmotor beschrieben wird, so gelten die Ausführungen aber gleicherweise auch für einen planaren Langstatorlinearmotor.

Fig.1 zeigt eine Transportanlage 1 in Form eines linearen Langstatorlinearmotors mit einem, üblicherweise ortsfesten, Stator 2 (Primärteil des Motors), entlang dem einer Vielzahl n>1 von Transporteinheiten T1 bis Tn (Sekundärteile des Motors) bewegbar sind. n wird hier als Index verwendet und dient der leichteren Unterscheidung der Transporteinheiten Tn. Die Transporteinheiten Tn müssen natürlich nicht gleich ausgeführt sein, sondern können unterschiedlich sein, insbesondere in den Abmessungen oder den damit möglichen Bewegungen.

Der Stator 2 kann auch aus mehreren Transportpfaden P1, P2 bestehen, wobei die Transporteinheiten Tn auf den verschiedenen Transportpfaden P1, P2 bewegbar sind, Dazu können die Transportpfade P1, P2 über Weichen W miteinander verbunden sein und eine Transporteinheit Tn kann an einer Weiche W1, W2 von einem Transportpfad P1, P2 auf den anderen wechseln. Ein Transportpfad P1, P2 kann dabei ein geschlossener Pfad sein oder auch ein offener Pfad. Durch das Aneinanderreihen von Transportpfaden P1, P2 lassen sich Transportanlagen 1 sehr einfach und flexibel mit verschiedenen Bewegungsräumen für die Transporteinheiten Tn realisieren. Dabei ist der Bewegungsraum nicht auf eine Ebene beschränkt (wie im einfachen Beispiel der Fig.1), sondern kann sich auch beliebig im Raum erstrecken.

Entlang des Stators 2 sind Magnetfelderzeugungseinheiten 3, beispielsweise in Form von Antriebsspulen aber auch als bewegte Permanentmagnete, angeordnet. Aus Gründen der Übersichtlichkeit sind in Fig.1 nur einige der Magnetfelderzeugungseinheiten 3 dargestellt.

Der Stator 2 kann auch in Form von Statorsegmenten Sm aufgebaut sein, wobei an jedem Statorsegment Sm eine Mehrzahl von Magnetfelderzeugungseinheiten 3 angeordnet sind. Die Statorsegmente Sm werden nebeneinander oder hintereinander angeordnet und können verschiedene Geometrien haben, beispielsweise gerade Segmente, verschiedene Bögen, Weichensegmentes usw.

An jeder Transporteinheit Tn ist ein Erregungsmagnet 4, in der Regel eine Anordnung von Permanentmagneten aber auch in Form von Elektromagneten, angeordnet, der ein Erregungsmagnetfeld erzeugt. Das Erregungsmagnetfeld einer Transporteinheit Tn wirkt zur Bewegung der Transporteinheit Tn mit einem Antriebsmagnetfeld zusammen, das von Magnetfelderzeugungseinheiten 3 im Bereich der Transporteinheit Tn erzeugt wird. Wieviele Magnetfelderzeugungseinheiten 3 für die Erzeugung des Antriebsmagnetfeldes verwendet werden, spielt dabei keine Rolle. Beispielsweise werden an Antriebsspulen als Magnetfelderzeugungseinheiten 3 Antriebsspannungen angelegt, um das gewünschte Antriebsmagnetfeld zu erzeugen. Oder es werden Permanentmagnete als Magnetfelderzeugungseinheiten 3 bewegt, um das gewünschte Antriebsmagnetfeld zu erzeugen. Um die Transporteinheit Tn zu bewegen, wird das Antriebsmagnetfeld durch entsprechendes Ansteuern der Magnetfelderzeugungseinheiten 3 in Bewegungsrichtung weiterbewegt. Durch das Zusammenwirken des Antriebsmagnetfeldes und des Erregungsmagnetfeldes können auf eine Transporteinheit Tn Kräfte in (oder auch gegen die) Bewegungsrichtung erzeugt werden (im Falle eines planaren Langstatorlinearmotors auch in zwei Richtung in einer Bewegungsebene), aber auch Kräfte normal darauf. Solche Normalkräfte können in einer Weiche W1, W2 verwendet werden, um die Transporteinheit Tn auf den gewünschten Transportpfad P1, P2 zu lenken, um die Transporteinheit Tn am Stator 2 (beispielsweise eine schwebende Transporteinheit Tn eines planaren Langstatorlinearmotors) zu führen aber auch um eine Transporteinheit Tn am Stator 2 zu halten. Es lassen sich damit auch Momente in allen Raumrichtungen auf die Transporteinheit Tn erzeugen. Diese Motorprinzip ist hinlänglich bekannt.

Es kann an einer Transporteinheit Tn auch beidseitig ein Erregungsmagnet 4 angeordnet sein, wie in Fig.1 angedeutet, um mit Magnetfelderzeugungseinheiten 3 an beiden Seiten der Transporteinheit Tn zusammenwirken zu können. Das kann beispielsweise in einer Weiche W1, W2 vorgesehen sein. Es können damit aber auch die Kräfte insbesondere in Bewegungsrichtung erhöht werden.

Entlang des Stators 2 der Transportanlage 1 kann auch eine Bearbeitungsstation 5 vorgesehen sein, um ein mit einer Transporteinheit Tn transportiertes Produkt 6 zu bearbeiten oder zu manipulieren. Das Produkt 6 kann bei der Bearbeitung auf der Transporteinheit Tn verbleiben und die Transporteinheit Tn kann bei der Bearbeitung angehalten werden oder bewegt werden. Das Produkt 6 kann zur Bearbeitung aber auch von der Transporteinheit Tn entnommen werden und nach der Bearbeitung wieder auf die Transporteinheit Tn, oder eine andere Transporteinheit, zur Weiterbewegung abgelegt werden. Es kann, unabhängig von einer Bearbeitungsstation 5, auch eine Transferstation 7 vorgesehen sein, um ein Produkt 6 auf eine Transporteinheit Tn zur Weiterbeförderung in der Transportanlage 1 abzulegen (beispielsweise zur Zuführung der Produkte in die Transportanlage 1) und/oder um ein Produkt 6 von einer Transporteinheit Tn zu entnehmen (beispielsweise nach fertiger Bearbeitung). Hierfür kann eine Handhabungseinrichtung 8, beispielsweise ein Roboter, vorgesehen sein. Das Ablegen oder Entnehmen der Produkte 6 kann bei stillstehender Transporteinheit Tn oder auch bei bewegter Transporteinheit Tn erfolgen.

Zur Steuerung der Bewegung der Transporteinheiten Tn der Transportanlage 1 ist eine Anlagensteuereinheit 10 vorgesehen. Die Anlagensteuereinheit 10 steuert insbesondere die Magnetfelderzeugungseinheiten 3 an, um die gewünschten Bewegungen der Transporteinheiten Tn umzusetzen. Die gewünschten Bewegungen der Transporteinheiten Tn sind üblicherweise vorgegeben, beispielsweise aufgrund einer Bewegungsplanung. Zu jedem Zeitschritt, üblicherweise im 10 oder 100ms Bereich, der Regelung der Bewegungen der Transporteinheiten Tn ist für jede Transporteinheiten Tn ein Bewegungssollwert, beispielsweise eine Sollposition oder eine Sollgeschwindigkeit, bekannt, aus denen die Anlagensteuereinheit 10 Steuersignale ermittelt, die dann von den Magnetfelderzeugungseinheiten 3, die mit der jeweiligen Transporteinheit Tn zusammenwirken, umgesetzt werden. Ein Steuersignal ist beispielsweise eine Spulenspannung einer Antriebsspule, die dann von einer Leistungselektronik erzeugt und an die Antriebsspule angelegt werden kann. Für die Ermittlung der Steuersignale können auch die aktuellen Positionen der Transporteinheiten Tn am Stator 2 ermittelt werden, beispielsweise als Istpositionen der Transporteinheiten Tn, und der Anlagensteuereinheit 10 zur Regelung der Bewegungen zur Verfügung gestellt werden. Zu diesem Zweck können entlang des Stators 2 auch in hinlänglich bekannter Weise Positionssensoren angeordnet sein, um die Positionen der Transporteinheiten Tn zu erfassen.

Die Anlagensteuereinheit 10 kann auch als verteilte Steuerung ausgeführt sein mit einer Mehrzahl von zusammenarbeitenden Steuereinheiten. Beispielsweise sind mehrere Segmentsteuereinheiten 11 vorgesehen, die für einen bestimmten Abschnitt des Stators 2 zuständig sind. Die einzelnen Segmentsteuereinheiten 11 können auch miteinander verbunden sein, beispielsweise über einen Datenbus 12 wie in Fig.1, um gegebenenfalls benötigte Daten untereinander austauschen zu können. Die Anlagensteuereinheit 10 kann neben Segmentsteuereinheiten 11 auch eine übergeordnete Steuereinheit 13 umfassen, in der beispielsweise die Sollwerte der Bewegungen der Transporteinheiten Tn generiert werden und in der auch eine Kollisionslogik 14 zur Vermeidung von Kollisionen zwischen Transporteinheiten Tn implementiert sein kann. Eine solche Kollisionslogik 14 kann aber auch in einer eigenständigen Kollisionssteuereinheit 15 implementiert sein (wie im Beispiel der Fig.1), die beispielsweise ebenfalls über den Datenbus 12 mit anderen Steuereinheiten der Anlagensteuereinheit 10 verbunden sein kann. Die Kollisionssteuereinheit 15 kann Teil der Anlagensteuereinheit 10 sein. Auch andere Komponenten der Transportanlage 1 können über den Datenbus 12 mit der Anlagensteuereinheit 10 verbunden sein, beispielsweise eine Steuereinheit der Handhabungseinrichtung 8 (wie in Fig.1 strichliert angedeutet) oder eine Steuereinheit einer Bearbeitungsstation 5.

Eine Steuereinheit (z.B. Anlagensteuereinheit, Segmentsteuereinheit, übergeordnete Steuereinheit, Kollisionssteuereinheit, Steuereinheit der Handhabungseinrichtung oder Bearbeitungsstation) ist üblicherweise als mikroprozessorbasierte Hardware ausgeführt, beispielsweise als Computer, Mikrocontroller, speicherprogrammierbare Steuerung usw. Auf der mikroprozessorbasierten Hardware wird in bekannter Weise entsprechende Steuersoftware ausgeführt, um die gewünschte Funktionalität zu erzielen. Die Hardware kann dazu entsprechende Schnittstellen nach außen, um die gewünschte Funktionalität zu realisieren. Es ist aber auch eine Ausführung einer Steuereinheit als integrierter Schaltkreis denkbar, beispielsweise als Field Programmable Gate Array (FPGA) oder anwendungsspezifische integrierte Schaltung (ASIC). Auch Mischformen sind denkbar.

Die Kollisionslogik 14, üblicherweise in Form von Kollisionssoftware, der Anlagensteuereinheit 10 überprüft anhand von vorgegebenen, beispielsweise programmierten oder konfigurierten Kriterien, ob Gefahr besteht, dass eine Transporteinheit Tn aufgrund deren Bewegung mit einer benachbarten Transporteinheit Tn-1 oder einer Barriere B der Transportanlage 1 kollidiert. Eine benachbarte Transporteinheit Tn-1 kann eine in Bewegungsrichtung der Transporteinheit Tn gesehen davor oder dahinter fahrende Transporteinheit Tn-1 (wobei deren Bewegungsrichtung unerheblich ist) sein (insbesondere bei einem linearen Langstatorlinearmotor, aber auch bei einem planaren Langstatorlinearmotor), oder auch eine daneben fahrende Transporteinheit Tn-1 (insbesondere bei einem planaren Langstatorlinearmotor, oder im Bereich einer Weiche W). Eine Barriere B der Transportanlage 1 kann beispielsweise ein Teil sein, der einen Bewegungspfad der Transporteinheit Tn versperrt. Ein Beispiel hierfür ist eine Tür an einer Bearbeitungsstation 5, die verschlossen ist, wenn sich eine andere Transporteinheit Tn darin befindet. Eine geöffnete Tür wäre hingegen keine Barriere B. Eine Barriere B kann aber auch nur logisch in der Anlagensteuerung existieren. Beispielsweise kann mittels solcher logischen Barrieren B die Einfahrt in einen Weichenbereich für andere Transporteinheiten gesperrt werden, wenn sich gerade eine Transporteinheit Tn in der Weiche W befindet. Mit einer solche logischen Barriere B lassen sich aber auch Bereiche mit einer Geschwindigkeitsbeschränkung oder Beschleunigungsbeschränkung realisieren. Hier verhindert eine Barriere B beispielsweise, dass eine Transporteinheit Tn mit einer über einer definierten Maximalgeschwindigkeit liegenden Geschwindigkeit in den Bereich der Geschwindigkeitsbeschränkung einfährt.

Die Kollisionslogik 14 überprüft dabei insbesondere den Abstand A in Bewegungsrichtung (im Falle eines Planarmotors auch in beiden Bewegungsrichtungen oder im Bereich einer Weiche W auch quer zur Bewegungsrichtung) zwischen benachbarten Transporteinheit Tn, Tn-1 oder zwischen einer Transporteinheit Tn und einer Barriere B und beurteilt, ob der Abstand A ausreichend ist, um im Fehlerfall die Bewegung einer Transporteinheit Tn, Tn-1 zu ändern, um eine Kollision zu vermeiden. Die Veränderung der Bewegung kann beispielsweise als Stoppen der Transporteinheit Tn, Tn-1 mit einer vorgegebenen maximalen Verzögerung (Beschleunigungslimit) implementiert sein, oder auch als das Reduzieren der aktuellen Geschwindigkeit auf eine vorgegebene niedrigere Geschwindigkeit mit einer vorgegebenen Verzögerung. Auch andere Veränderungen der Bewegung sind durchaus denkbar, beispielsweise eine Richtungsänderung auf einem planaren Langstatorlinearmotor. Hierfür kann ein Kollisionsabstand K in Bewegungsrichtung (im Falle eines Planarmotors auch in beiden Bewegungsrichtungen oder im Bereich einer Weiche W auch quer zur Bewegungsrichtung) zwischen zwei benachbarten Transporteinheiten Tn, Tn-1 oder zwischen einer Transporteinheit Tn und einer Barriere B vorgegeben sein, der nicht unterschritten werden darf, weil ansonsten die Bewegung zur Vermeidung einer Kollision nicht mehr angepasst werden kann.

Der Abstand A ergibt sich aus den Kollisionsabmessungen der Transporteinheit Tn, Tn-1 und den aktuellen Positionen der benachbarten Transporteinheiten Tn, Tn-1 am Stator 2. Die aktuellen Positionen können mit Positionssensoren bestimmte Positionen sein, können aber auch in der Anlagensteuereinheit 10 ermittelte Positionen sein, oder einfach auch vorgegebene Sollwerte für Positionen sein. Die Kollisionsabmessungen ergeben sich aus den Geometrien der Transporteinheiten Tn, Tn-1. Im Ausführungsbeispiel nach Fig.1 sind die Kollisionsabmessungen durch die Länge L und die Breite b einer Transporteinheit Tn, Tn-1 gegeben. Die Kollisionsabmessungen können reale Werte sein, die sich unmittelbar aus der Geometrie der jeweiligen Transporteinheit Tn, Tn-1 ergeben, können aber auch nur logische Werte sein, beispielsweise indem eine einfache, die Kollisionsabmessungen festlegende geometrische Figur (z.B. ein Rechteck) um die Transporteinheit Tn, Tn-1 gelegt wird, die zumindest die für Kollisionen relevanten Bereiche der Transporteinheit Tn, Tn-1 umgibt. Das kann die Berechnung des Abstandes A erleichtern. Auf geraden Strecken eines linearen Langstatorlinearmotors kann die Kollisionsabmessung in Bewegungsrichtung ausreichend sein, um den Abstand A zu ermitteln. In Kurven, oder auch in Weichen W, kann aber auch die Kollisionsabmessung quer zur Bewegungsrichtung wichtig sein, weil eine Transporteinheit Tn, Tn-1 in einer Kurve an den Enden auslenken kann und sich der Abstand radial innen verkleinern kann. Die für die Kollisionslogik 14 benötigten Kollisionsabmessungen einer Transporteinheit Tn, Tn-1 können jedenfalls als bekannt vorausgesetzt werden.

Ein Kollisionsabstand K und ein Abstand A, sowie die Positionen werden natürlich auf einen bestimmten Bezugspunkt der Transporteinheit Tn, Tn-1 bezogen, beispielsweise ein Mittelpunkt (wie in Fig.1) oder ein vorderes oder hinteres (jeweils in Bewegungsrichtung gesehen) Ende einer Transporteinheit Tn, Tn-1.

Der Kollisionsabstand K hängt vom aktuellen Bewegungszustand, insbesondere Geschwindigkeit und Beschleunigung, der Transporteinheit Tn, Tn-1 ab. Der Kollisionsabstand K ist so zu wählen bzw. vorzugeben, dass durch Eingriff in die Bewegungen der benachbarten Transporteinheiten Tn, Tn-1 oder der Transporteinheit Tn (bei einer Barriere B) eine Kollision vermieden werden kann. Damit spielt auch das vorgegebenen Kollisionsbewegungslimit für die Bestimmung des Kollisionsabstandes K eine wichtige Rolle, weil dieses festlegt, wie in die Bewegungen der Transporteinheiten Tn, Tn-1 eingegriffen werden kann, beispielsweise mit einer maximalen Verzögerung gebremst (Beschleunigungslimit) oder auf eine maximale Geschwindigkeit (Geschwindigkeitslimit) beschleunigt, eventuell mit einer maximalen Beschleunigung. Der Kollisionsabstand K kann konfiguriert sein, kann aber auch im Betrieb laufend angepasst werden, beispielsweise durch die Kollisionslogik 14.

Im Betrieb der Transportanlage 1 wird folglich mit einer vorgegebenen Kollisionslogik 14 laufend überwacht, dass ein Abstand A zwischen am Stator 2 benachbarten Transporteinheiten Tn, Tn-1 oder zwischen einer Transporteinheit Tn und einer Barriere B ausreichend groß ist, um unter Berücksichtigen von vorgegebenen Kollisionsbewegungslimits und vorgegebenen Kollisionsabmessungen der Transporteinheiten Tn, Tn-1 eine Kollision der benachbarten Transporteinheiten Tn, Tn-1 oder der Transporteinheit Tn mit der Barriere B verhindern zu können. Die Kollisionsbewegungslimits legen dabei fest, wie die Bewegung einer Transporteinheit Tn, Tn-1 gegebenenfalls verändert werden kann, also beispielsweise mit welcher maximalen Verzögerung gebremst werden kann. Diese Überprüfung erfolgt in einem Zeitschritt der Kollisionssteuerung, üblicherweise im 10 bis 100ms Bereich, wobei der Zeitschritt der Kollisionssteuerung vorzugsweise dem Zeitschritt der Regelung der Bewegungen der Transporteinheiten Tn entspricht.

Der Kollisionsabstand K kann einmal für vorgegebene Randbedingungen (Kollisionsbewegungslimits, Kollisionsabmessungen, beteiligte Transporteinheit(en) Tn, Tn-1) ermittelt werden und ändert sich bei gleichbleibenden Randbedingungen nicht mehr. Der Kollisionsabstand K kann für verschiedene Kombinationen von Transporteinheiten Tn, Tn-1 unterschiedlich sein, was aber am grundsätzlichen Vorgehen nichts ändert. Ändern sich die Randbedingungen, kann der Kollisionsabstand K neu ermittelt werden. Das kann durch einfach kinematische Berechnungen erfolgen.

Nachdem der Kollisionsabstand K von den Kollisionsabmessungen und den Kollisionsbewegungslimits der beteiligten Transporteinheit(en) Tn, Tn-1 abhängt, kann eine Änderung der Kollisionsabmessungen oder der Kollisionsbewegungslimits zu unerwarteten Zuständen auf der Transportanlage 1 führen. Im schlimmsten Fall führt das zu Kollisionen oder zu einem Notstopp eines Teils oder gar der gesamten Transportanlage 1. Das wird anhand der folgenden plakativen Beispiele erläutert, wobei es daneben noch weitere Beispiele geben kann.

Die Kollisionsabmessung einer Transporteinheit Tn wird in Bewegungsrichtung vergrößert, beispielsweise weil ein bestimmtes Produkt 6 an der Transporteinheit Tn abgelegt wird und dieses über den vorderen Rand der Transporteinheit Tn hinausragt, wie beispielsweise in Fig.1 an der Transporteinheit T1 strichliert angedeutet. Das würde zu einem verringerten Abstand A zur in gleichen Bewegungsrichtung vorausfahrenden Transporteinheit Tn-1 oder zu einer davor liegenden Barriere B oder zu einer auf die Transporteinheit Tn zufahrenden Transporteinheit Tn-1 führen, weil der Abstand A von der Kollisionsabmessung abhängig ist. Dabei kann der Kollisionsabstand K zwischen den beiden Transporteinheiten Tn, Tn-1 oder zu einer Barriere B unterschritten werden.

Die Kollisionsabmessung einer Transporteinheit Tn wird gegen die Bewegungsrichtung vergrößert, beispielsweise weil ein bestimmtes Produkt 6 an der Transporteinheit Tn abgelegt wird. Das würde zu einem verringerten Abstand A zur dahinterfahrenden Transporteinheit Tn-1 oder zu einer dahinter liegenden Barriere B oder zu einer von der Transporteinheit Tn wegfahrenden Transporteinheit Tn-1 führen, weil der Abstand A von der Kollisionsabmessung abhängig ist. Dabei kann der Kollisionsabstand K zwischen den beiden Transporteinheiten Tn, Tn-1 oder zu einer Barriere B unterschritten werden.

Dieselben Situationen können eintreten, insbesondere bei einem planaren Langstatorlinearmotor, wenn das Produkt 6 seitlich weiter hinausragt (wie ebenfalls in Fig.1 angedeutet). Die seitliche Vergrößerung kann auch in einer Kurve oder Weiche W eines linearen Langstatorlinearmotors zu einem verkleinerten Abstand A führen.

Die maximale Verzögerung einer Transporteinheit Tn wird vergrößert. Damit kann der Abstand A zu einer benachbarten Transporteinheit Tn-1 zu klein werden, beispielsweise wenn die vorausfahrende Transporteinheit Tn mit dieser vergrößerten maximalen Verzögerung gebremst wird.

Die maximale Verzögerung einer Transporteinheit Tn wird verringert. Damit kann der Abstand A zu einer vorausfahrenden Transporteinheit Tn-1 zu klein werden, beispielsweise wenn die Transporteinheit Tn mit dieser verringerten maximalen Verzögerung gebremst wird, wodurch sich der Bremsweg verlängert. Dasselbe gilt im Fall eine Barriere B, wobei der Abstand A zur Barriere zu klein werden kann.

Grundsätzlich kann insbesondere dann ein Problem bei der Kollisionsvermeidung entstehen, wenn durch eine Änderung eines Bewegungslimits ein Bremsweg einer vorausfahrenden Transporteinheit Tn kürzer wird, oder wenn ein Bremsweg einer hinterherfahrenden Transporteinheit Tn länger wird.

Um solche Situationen zu vermeiden, wenn während des Betriebs der Transportanlage 1 für eine Transporteinheit Tn ein neues Bewegungslimit oder eine neue Abmessung vorgegeben wird, wird wie folgt vorgegangen. Es wird überprüft, ob das neue Bewegungslimit oder die neue Abmessung zu einem Kollisionsrisiko mit einer benachbarten Transporteinheit Tn-1 oder mit einer Barriere B führt. Dabei kann es sich um eine vorausfahrende, hinterherfahrende oder um eine entgegenfahrende Transporteinheit Tn-1 handeln. Im Falle eines planaren Langstatorlinearmotors sind dabei natürlich beide Bewegungsrichtungen zu überprüfen. Das neue Bewegungslimit oder die neue Abmessung wird zuerst aber nur in der Anlagensteuereinheit 10 hinterlegt, aber nicht sofort von der Kollisionslogik 14 übernommen. Die Kollisionslogik 14 prüft, ob mit dem neuen Bewegungslimit als Kollisionsbewegungslimit für die erste Transporteinheit Tn oder mit der neuen Abmessung als Kollisionsabmessung der ersten Transporteinheit Tn ein Kollisionsrisiko mit einer anderen Transporteinheit Tn-1 oder mit einer Barriere B erkannt wird. Das kann einfach mit den in der Kollisionslogik 14 vorgegebenen Kriterien zur Überprüfung eines Kollisionsrisikos erfolgen, wobei für diese Überprüfung die neue Abmessung oder das neue Bewegungslimit angenommen wird, beispielsweise für die Ermittlung eines Abstandes A oder eines Kollisionsabstandes K. Wenn kein Kollisionsrisiko erkannt wird, wird das neue Bewegungslimit als neues Kollisionsbewegungslimit für diese Transporteinheit Tn oder die neue Abmessung als Kollisionsabmessung für diese Transporteinheit 14 übernommen und hinkünftig (bis zu einer möglichen erneuten Änderung) in der Kollisionslogik 14 verwendet.

Solange die neue Abmessung oder das neue Bewegungslimit nicht übernommen wurde, kann diese Überprüfung wiederholt werden, beispielsweise in jedem Zeitschritt der Überprüfung, solange bis die neue Abmessung oder das neue Bewegungslimit übernommen werden kann. Wenn sich an den Bewegungen der benachbarten Transporteinheiten Tn, Tn-1 nichts ändert, dann kann es vorkommen, dass die neue Abmessung oder das neue Bewegungslimit gar nicht übernommen wird. Dieser Fall ist aber unwahrscheinlich, insbesondere bei Transportanlagen 1 mit langen oder mehreren Bewegungspfaden P1, P2 und vielen Transporteinheiten Tn.

Wenn es die Anlagensteuerung 10 ermöglicht, kann aber auch versucht werden, die Bewegung zumindest einer der benachbarten Transporteinheiten Tn, Tn-1 zu verändern, sodass eine Übernahme der neuen Abmessung oder des neuen Bewegungslimits möglich wird.

Falls durch die Kollisionslogik 14 ein Kollisionsrisiko erkannt wird, kann daher zuerst die Bewegung der Transporteinheit Tn und/oder, falls erforderlich, der benachbarten Transporteinheit Tn-1 verändert werden, sodass bei Verwendung des neuen Bewegungslimits als Kollisionsbewegungslimit für die erste Transporteinheit Tn oder bei Verwendung der neuen Abmessung als Kollisionsabmessung das Kollisionsrisiko wegfällt. Erst wenn diese Anpassung der Bewegung dazu führt, dass kein Kollisionsrisiko mehr erkannt wird, wird das neue Bewegungslimit als Kollisionsbewegungslimit für die erste Transporteinheit Tn verwendet oder die neue Abmessung als Kollisionsabmessung der ersten Transporteinheit Tn in der Kollisionslogik 14 zur Kollisionsvermeidung verwendet.

Diese Überprüfung eines Kollisionsrisikos kann durch die Kollisionslogik 14 in jedem Zeitschritt der Kollisionssteuerung erfolgen, oder auch in größeren Zeitintervallen (beispielsweise ganzzahlige Vielfache des Zeitschritts der Kollisionssteuerung).

Im Falle einer Veränderung einer Kollisionsabmessung einer Transporteinheit Tn, insbesondere bei einer Vergrößerung, kann es vorteilhaft sein, wenn die Änderung in der Anlagensteuereinheit 10 schon vor der eigentlichen Änderung auf der Transportanlage 1 erfolgt, also beispielsweise bevor tatsächlich ein Produkt 6 auf der Transporteinheit Tn abgelegt wird. Damit kann erreicht werden, dass die Kollisionslogik 14 zum Zeitpunkt der tatsächlichen Änderung auf der Transportanlage 1 schon mit der neuen Kollisionsabmessung arbeitet.

Die Veränderung einer Kollisionsabmessung oder eines Kollisionsbewegungslimit einer Transporteinheit Tn kann von einem Anwender veranlasst sein, kann aber auch aus der Anlagensteuereinheit 10, beispielsweise einer übergeordneten Steuereinheit 13, heraus erfolgen. Beispielsweise kann über die Kollisionsabmessung vom Anwender einfach eine Anpassung eines Sicherheitsabstandes zwischen Transporteinheiten Tn, Tn-1 oder zu einer Barriere B veranlasst werden. Eine Änderung von der Anlagensteuereinheit 10 könnte erfolgen, wenn ein Bewegungsbefehl für eine Transporteinheit Tn von einem anderen Bewegungsbefehl mit anderen Kollisionsbewegungslimit abgelöst wird.

## Patentansprüche

1. Verfahren zum Betreiben einer Transportanlage (1) in Form eines Langstatorlinearmotors mit einer Vielzahl von Transporteinheiten (Tn), wobei im Betrieb der Transportanlage (1) mit einer vorgegebenen Kollisionslogik (14) laufend überwacht wird, dass ein Abstand (A) zwischen benachbarten Transporteinheiten (Tn) oder zwischen einer Transporteinheit (Tn) und einer Barriere (B) ausreichend groß ist, sodass unter Berücksichtigung von vorgegebenen Kollisionsbewegungslimits und vorgegebenen Kollisionsabmessungen der Transporteinheiten (Tn) oder der Transporteinheit (Tn) eine Kollision der benachbarten Transporteinheiten (Tn) oder der Transporteinheit (Tn) und der Barriere (B) verhinderbar ist, **dadurch gekennzeichnet, dass** während des Betriebs der Transportanlage (1) für eine erste Transporteinheit (Tn) ein neues Bewegungslimit oder eine neue Abmessung vorgegeben wird und vor der Verwendung des neuen Bewegungslimits als Kollisionsbewegungslimit oder der neuen Abmessung als Kollisionsabmessung in der Kollisionslogik (14) überprüft wird, ob das neue Bewegungslimit oder die neue Abmessung aufgrund der vorgegebenen Kollisionslogik zu einem Kollisionsrisiko mit einer anderen, benachbarten Transporteinheit (Tn) oder einer Barriere (B) der Transportanlage (1) führt, **und dass** das neue Bewegungslimit in der Kollisionslogik als Kollisionsbewegungslimit für die erste Transporteinheit (Tn) verwendet wird oder die neue Abmessung in der Kollisionslogik als Kollisionsabmessung der ersten Transporteinheit (Tn) verwendet wird, wenn kein Kollisionsrisiko erkannt wird.

2. Verfahren nach Anspruch 1, **dadurch gekennzeichnet, dass** die Überprüfung des Kollisionsrisikos in vorgegebenen Zeitabständen wiederholt wird, wenn für die benachbarten Transporteinheiten (Tn) oder der Transporteinheit (Tn) und der Barriere (B) ein Kollisionsrisiko erkannt wird.

3. Verfahren nach Anspruch 1, **dadurch gekennzeichnet, dass** im Falle eines erkannten Kollisionsrisikos zuerst die Bewegung der ersten und/oder der anderen Transporteinheit (Tn) verändert wird, sodass bei Verwendung des neuen Bewegungslimits als Kollisionsbewegungslimit für die erste Transporteinheit (Tn) oder bei Verwendung der neuen Abmessung als Kollisionsabmessung für die erste Transporteinheit (Tn) das Kollisionsrisiko wegfällt und erst dann das neue Bewegungslimit in der Kollisionslogik als Kollisionsbewegungslimit für die erste Transporteinheit (Tn) verwendet wird oder die neue Abmessung in der Kollisionslogik als Kollisionsabmessung der ersten Transporteinheit (Tn) verwendet wird.

4. Transportanlage in Form eines Langstatorlinearmotors mit einer Vielzahl von Transporteinheiten (Tn) und mit einer Anlagensteuereinheit (10), die die Bewegungen der Transporteinheiten (Tn) regelt, wobei eine Kollisionssteuereinheit (15) vorgesehen ist, die im Betrieb der Transportanlage (1) mit einer vorgegebenen Kollisionslogik (14) laufend überwacht, dass ein Abstand (A) zwischen benachbarten Transporteinheiten (Tn) oder zwischen einer Transporteinheit (Tn) und einer Barriere (B) ausreichend groß ist, sodass unter Berücksichtigung von vorgegebenen Kollisionsbewegungslimits und vorgegebenen Kollisionsabmessungen der Transporteinheiten (Tn) oder der Transporteinheit (Tn) eine Kollision der benachbarten Transporteinheiten (Tn) oder der Transporteinheit (Tn) und der Barriere (B) verhinderbar ist, **dadurch gekennzeichnet, dass** während des Betriebs der Transportanlage (1) für eine erste Transporteinheit (Tn) ein neues Bewegungslimit oder eine neue Abmessung vorgebbar ist und die Kollisionssteuereinheit (15) vor der Verwendung des neuen Bewegungslimits als Kollisionsbewegungslimit oder der neuen Abmessung als Kollisionsabmessung in der Kollisionslogik (14) überprüft, ob das neue Bewegungslimit oder die neue Abmessung aufgrund der vorgegebenen Kollisionslogik (14) zu einem Kollisionsrisiko mit einer anderen, benachbarten Transporteinheit (Tn) oder einer Barriere (B) der Transportanlage (1) führt, **und dass** die Kollisionslogik (14) bei fehlendem Kollisionsrisiko das neue Bewegungslimit als Kollisionsbewegungslimit für die erste Transporteinheit (Tn) übernimmt oder die neue Abmessung in der Kollisionslogik (14) als Kollisionsabmessung der ersten Transporteinheit (Tn) übernimmt.

5. Transportanlage nach Anspruch 4, **dadurch gekennzeichnet, dass** die Anlagensteuereinheit (10) im Falle eines erkannten Kollisionsrisikos zuerst die Bewegung der ersten und/oder der anderen Transporteinheit (Tn) verändert, sodass bei Verwendung des neuen Bewegungslimits als Kollisionsbewegungslimit für die erste Transporteinheit (Tn) oder bei Verwendung der neuen Abmessung als Kollisionsabmessung für die erste Transporteinheit (Tn) das Kollisionsrisiko wegfällt und die Kollisionslogik (14) erst dann das neue Bewegungslimit als Kollisionsbewegungslimit für die erste Transporteinheit (Tn) verwendet oder die neue Abmessung als Kollisionsabmessung der ersten Transporteinheit (Tn) verwendet.

## Claims

1. A method for operating a transport system (1) in the form of a long-stator linear motor with a plurality of transport units (Tn), wherein, during operation of the transport system (1), a predetermined collision logic (14) continuously monitors that a distance (A) between adjacent transport units (Tn) or between a transport unit (Tn) and a barrier (B) is sufficiently large, so that, taking into account predetermined collision movement limits and predetermined collision dimensions of the transport units (Tn) or the transport unit (Tn), a collision between the adjacent transport units (Tn) or the transport unit (Tn) and the barrier (B) can be prevented, **characterized in that**, during operation of the transport system (1), a new movement limit or a new dimension is predetermined for a first transport unit (Tn), and, prior to using the new movement limit as a collision movement limit or the new dimension as a collision dimension in the collision logic (14), it is checked whether the new movement limit or the new dimension leads to collision risk with another, adjacent transport unit (Tn) or a barrier (B) of the transport system (1) due to the predetermined collision logic, **and in that** the new movement limit is used as a collision movement limit for the first transport unit (Tn) in the collision logic, or the new dimension is used as a collision dimension of the first transport unit (Tn) in the collision logic, if no collision risk is detected.

2. The method according to claim 1, **characterized in that** the check of the collision risk is repeated at predetermined time intervals when a collision risk is recognized for the adjacent transport units (Tn) or the transport unit (Tn) and the barrier (B).

3. The method according to claim 1, **characterized in that,** in the event of a detected collision risk, the movement of the first and/or the other transport unit (Tn) is first modified, so that, when using the new movement limit as a collision movement limit for the first transport unit (Tn) or when using the new dimension as a collision dimension for the first transport unit (Tn), the collision risk is eliminated, and only then is the new movement limit in the collision logic used as a collision movement limit for the first transport unit (Tn), or the new dimension in the collision logic is used as a collision dimension of the first transport unit (Tn).

4. A transport system in the form of a long-stator linear motor comprising a plurality of transport units (Tn) and a system control unit (10) which controls the movements of the transport units (Tn), wherein a collision control unit (15) is provided which, during operation of the transport system (1), continuously monitors using a predetermined collision logic (14) to ensure that a distance (A) between adjacent transport units (Tn) or between a transport unit (Tn) and a barrier (B) is sufficiently large, so that, taking into account predetermined collision movement limits and predetermined collision dimensions of the transport units (Tn) or the transport unit (Tn), a collision between the adjacent transport units (Tn) or the transport unit (Tn) and the barrier (B) can be prevented, **characterized in that**, during operation of the transport system (1), a new movement limit or a new dimension can be specified for a first transport unit (Tn), and, prior to using the new movement limit as the collision movement limit or the new dimension as the collision dimension in the collision logic (14), the collision control unit (15) checks whether the new movement limit or the new dimension results in a collision risk with another, adjacent transport unit (Tn) or a barrier (B) of the transport system (1) due to the predetermined collision logic (14), **and in that** the collision logic (14) adopts the new movement limit as the collision movement limit for the first transport unit (Tn) or adopts the new dimension in the collision logic (14) as the collision dimension of the first transport unit (Tn), if there is no collision risk.

5. The transport system according to claim 4, **characterized in that**, in the event of a detected collision risk, the system control unit (10) first modifies the movement of the first and/or the other transport unit (Tn), so that, when using the new movement limit as a collision movement limit for the first transport unit (Tn) or when using the new dimension as a collision dimension for the first transport unit (Tn), the collision risk is eliminated and only then does the collision logic (14) use the new movement limit as a collision movement limit for the first transport unit (Tn) or use the new dimension as a collision dimension of the first transport unit (Tn).

## Revendications

1. Procédé pour faire fonctionner une installation de transport (1) sous la forme d'un moteur linéaire à stator long avec une pluralité d'unités de transport (Tn), une logique de collision (14) prédéfinie permettant lors du fonctionnement de l'installation de transport (1) de surveiller en continu qu'une distance (A) entre des unités de transport (Tn) voisines ou entre une unité de transport (Tn) et une barrière (B) est suffisamment grande si bien que, en tenant compte de limites de mouvement de collision prédéfinies et de dimensions de collision prédéfinies des unités de transport (Tn) ou de l'unité de transport (Tn), une collision entre les unités de transport (Tn) voisines ou l'unité de transport (Tn) et la barrière (B) peut être évitée, **caractérisé en ce que**, pendant le fonctionnement de l'installation de transport (1), une nouvelle limite de mouvement ou une nouvelle dimension est prédéfinie pour une première unité de transport (Tn) et il est vérifié avant l'utilisation de la nouvelle limite de mouvement comme limite de mouvement de collision ou de la nouvelle dimension comme dimension de collision dans la logique de collision (14) si la nouvelle limite de mouvement ou la nouvelle dimension entraîne un risque de collision avec une autre unité de transport (Tn) voisine ou une barrière (B) de l'installation de transport (1) en raison de la logique de collision prédéfinie, et que la nouvelle limite de mouvement est utilisée dans la logique de collision comme limite de mouvement de collision pour la première unité de transport (Tn) ou la nouvelle dimension est utilisée dans la logique de collision comme dimension de collision de la première unité de transport (Tn), lorsqu'aucun risque de collision n'est détecté.

2. Procédé selon la revendication 1, **caractérisé en ce que** la vérification du risque de collision est répétée à des intervalles de temps prédéfinis lorsqu'un risque de collision est détecté pour les unités de transport (Tn) voisines ou l'unité de transport (Tn) et la barrière (B).

3. Procédé selon la revendication 1, **caractérisé en ce que**, dans le cas d'un risque de collision détecté, le mouvement de la première et/ou de l'autre unité de transport (Tn) est d'abord modifié si bien que, lorsque la nouvelle limite de mouvement est utilisée comme limite de mouvement de collision pour la première unité de transport (Tn) ou lorsque la nouvelle dimension est utilisée comme dimension de collision pour la première unité de transport (Tn), le risque de collision est éliminé puis la nouvelle limite de mouvement est utilisée alors seulement dans la logique de collision en tant que limite de mouvement de collision pour la première unité de transport (Tn) ou la nouvelle dimension est utilisée alors seulement dans la logique de collision en tant que dimension de collision de la première unité de transport (Tn).

4. Installation de transport sous la forme d'un moteur linéaire à stator long avec une pluralité d'unités de transport (Tn) et avec une unité de commande d'installation (10), qui régule les mouvements des unités de transport (Tn), une unité de commande de collision (15) étant prévue, laquelle surveille en continu lors du fonctionnement de l'installation de transport (1) avec une logique de collision (14) prédéfinie qu'une distance (A) entre des unités de transport (Tn) voisines ou entre une unité de transport (Tn) et une barrière (B) est suffisamment grande si bien que, en tant compte de limites de mouvement de collision prédéfinies et de dimensions de collision prédéfinies des unités de transport (Tn) ou de l'unité de transport (Tn), une collision entre les unités de transport (Tn) voisines ou l'unité de transport (Tn) et la barrière (B) peut être évitée, **caractérisée en ce que**, pendant le fonctionnement de l'installation de transport (1), une nouvelle limite de mouvement ou une nouvelle dimension peut être prédéfinie pour une première unité de transport (Tn) et l'unité de commande de collision (15) vérifie avant l'utilisation de la nouvelle limite de mouvement comme limite de mouvement de collision ou de la nouvelle dimension comme dimension de collision dans la logique de collision (14) si la nouvelle limite de mouvement ou la nouvelle dimension entraîne, en raison de la logique de collision (14) prédéfinie, un risque de collision avec une autre unité de transport (Tn) voisine ou une barrière (B) de l'installation de transport (1), et qu'en l'absence d'un risque de collision, la logique de collision (14) prend en charge la nouvelle limite de mouvement en tant que limite de mouvement de collision pour la première unité de transport (Tn) ou prend en charge la nouvelle dimension dans la logique de collision (14) en tant que dimension de collision de la première unité de transport (Tn).

5. Installation de transport selon la revendication 4, **caractérisée en ce que** l'unité de commande d'installation (10) modifie d'abord le mouvement de la première et/ou de l'autre unité de transport (Tn) en cas de détection d'un risque de collision si bien que, lorsque la nouvelle limite de mouvement est utilisée en tant que limite de mouvement de collision pour la première unité de transport (Tn) ou lorsque la nouvelle dimension est utilisée en tant que dimension de collision pour la première unité de transport (Tn), le risque de collision est éliminé et la logique de collision (14) utilise alors seulement la nouvelle limite de mouvement en tant que limite de mouvement de collision pour la première unité de transport (Tn) ou utilise alors seulement la nouvelle dimension en tant que dimension de collision de la première unité de transport (Tn).
